# DEMANDE DE BREVET EUROPEEN

(11) **EP 4 404 130 A1**
(43) Date de publication de la demande: **24.07.2024**
(21) Numéro de dépôt: 24151400.9
(22) Date de dépôt: 11.01.2024
(51) Int. Cl.: G06Q 50/00, G06Q 10/101

(54) **SYSTEME ET PROCEDE DE GENERATION AUTOMATIQUE DE CONTENUS**

(30) Priorité: 18.01.2023 FR 2300442
(71) Demandeur: Airbus CyberSecurity SAS, 78990 Elancourt (FR)
(72) Inventeur: GADEK, Guillaume, 78990 Elancourt (FR); COSTE, Benjamin, 78990 Elancourt (FR); DEY, Alexandre, 78990 Elancourt (FR)
(74) Mandataire: Cabinet Le Guen Maillet

(57) **Abrégé**

Un système (100) est configuré pour générer automatiquement des contenus à partir de contraintes de niveau scénario correspondant à un graphe d'influence entre acteurs d'un scénario de simulation de cyber-influence et de lutte informationnelle. Un ordonnanceur dérive des contraintes de niveau séquence à partir des contraintes de niveau scénario et d'une base de connaissances, les contraintes de niveau séquence étant représentatives d'un graphe d'actions qui définit un enchaînement temporel de documents à produire automatiquement pour le compte desdits acteurs. Un sélecteur de contraintes dérive des contraintes de niveau document à partir des contraintes de niveau séquence et de contraintes linguistiques. Un modèle d'intelligence artificielle est customisé par un entraînement à partir de contenus préexistants et desdites contraintes de niveau document. Le système (100) génère automatiquement des contenus en utilisant le modèle customisé d'intelligence artificielle et lesdites contraintes de niveau document.

## Description

### DOMAINE TECHNIQUE

La présente invention concerne le domaine de la génération automatique de contenus à des fins de simulation de cyber-influence et de lutte informationnelle, notamment à des fins de formation ou d'entraînement à la compréhension de la cyber-influence et de la lutte informationnelle.

### ETAT DE LA TECHNIQUE ANTERIEURE

Actuellement, des spécialistes en cybersécurité créent de toutes pièces des environnements de simulation afin d'entraîner des équipes à la compréhension de la cyber-influence et de la lutte informationnelle.

Ces environnements simulent de l'activité de communication réaliste : acteurs, supports de communication, échanges de messages de différents types... avec inclusion d'informations suspectes afin que des participants à des sessions de formation les détectent.

Il est possible de créer ces environnements de simulation à partir de situations et données réelles, mais pour des raisons évidentes d'adaptation à des besoins pédagogiques, la pratique actuelle implique des opérateurs humains qui conçoivent et mettent en place manuellement l'essentiel de ces environnements de simulation, listes d'acteurs, supports de communication (articles en ligne, tweets...), et contenus.

La mise au point de ces environnements de simulation est fastidieuse, impliquant plusieurs personnes pendant plusieurs semaines, et manque souvent de réutilisabilité.

Il est alors souhaitable de pallier au moins cet inconvénient de l'état de la technique antérieure, et ce, de manière simple, efficace et peu coûteuse.

Il est notamment souhaitable de fournir une solution de mise en place d'environnements de simulation de cyber-influence et de lutte informationnelle qui limite les besoins d'interventions d'opérateurs humains.

### EXPOSE DE L'INVENTION

A cet effet, il est proposé un système de génération automatique de contenus configuré pour générer automatiquement des contenus à partir de contraintes de niveau scénario correspondant à un graphe d'influence entre acteurs d'un scénario de simulation de cyber-influence et de lutte informationnelle, le système de génération automatique de contenus comportant :
- un ensemble de bases de données comportant une base de connaissances et une base de données de contraintes ;
- un module de configuration comportant un ordonnanceur et un sélecteur de contraintes, l'ordonnanceur étant configuré pour dériver des contraintes de niveau séquence à partir des contraintes de niveau scénario et de la base de connaissances, les contraintes de niveau séquence étant représentatives d'un graphe d'actions qui définit un enchaînement temporel de documents à produire automatiquement pour le compte desdits acteurs, et le sélecteur de contraintes étant configuré pour dériver des contraintes de niveau document à partir des contraintes de niveau séquence et de contraintes linguistiques de la base de données de contraintes ;
- et un module de génération de contenus.

De plus, ledit système est tel que le module de configuration est en outre apte à customiser un modèle d'intelligence artificielle de type modèle de langage avec contraintes, par un entraînement dudit modèle d'intelligence artificielle à partir de contenus préexistants et desdites contraintes de niveau document. De plus, ledit système est tel que le module de génération de contenus est en outre apte à générer automatiquement des contenus en utilisant le modèle customisé d'intelligence artificielle et lesdites contraintes de niveau document.

Ainsi, grâce à une telle approche graduelle par niveaux de contraintes, une importante quantité de contenus peut être automatiquement générée, ce qui facilite la mise en place d'environnements de simulation de cyber-influence et de lutte informationnelle en limitant les besoins d'interventions d'opérateurs humains.

Dans un mode de réalisation particulier, l'ensemble de bases de données comporte en outre une base de données de contenus réels qui sont ou ont été accessibles en source ouverte et qui ont été collectés, et dans le cadre de l'entraînement de ladite intelligence artificielle, lesdits contenus préexistants incluent des contenus réels stockés dans la base de données de contenus réels.

Dans un mode de réalisation particulier, l'ensemble de bases de données comporte en outre une base de données de contenus générés qui sont des contenus automatiquement générés par le système de génération automatique de contenus au fil de sessions de simulation de cyber-influence et de lutte informationnelle, et dans le cadre de l'entraînement de ladite intelligence artificielle, lesdits contenus préexistants incluent des contenus générés stockés dans la base de données de contenus générés.

Dans un mode de réalisation particulier, l'ensemble de bases de données comporte en outre une base de données de modèles d'intelligence artificielle, le module de configuration comporte en outre un sélecteur de modèle d'intelligence artificielle apte à sélectionner, dans la base de données de modèles d'intelligence artificielle, un modèle générique d'intelligence artificielle sur lequel l'entraînement est réalisé pour obtenir le modèle customisé d'intelligence artificielle.

Dans un mode de réalisation particulier, ledit système comporte en outre un gestionnaire d'interface utilisateur, ainsi qu'un module d'évaluation de contenus apte à calculer un ensemble de métriques sur les contenus automatiquement générés et comparer ces métriques à des seuils prédéfinis, afin de fournir via le gestionnaire d'interface utilisateur un tableau de bord qualitatif vis-à-vis des contenus automatiquement générés.

Dans un mode de réalisation particulier, le module de configuration comporte en outre un module de formatage de contraintes apte à convertir les contraintes de niveau document depuis un langage adapté aux machines vers un langage naturel.

Dans un mode de réalisation particulier, le module de configuration est apte à analyser des données d'entrée pour récupérer des informations permettant d'établir les contraintes de niveau scénario, pour en outre récupérer des mots-clefs permettant à l'ordonnanceur, par recherche de similarités dans la base de connaissances, de définir des contextes de contenus dans les contraintes de niveau séquence.

Il est aussi proposé un procédé de génération automatique de contenus à partir de contraintes de niveau scénario correspondant à un graphe d'influence entre acteurs d'un scénario de simulation de cyber-influence et de lutte informationnelle, le procédé étant implémenté par un système de génération automatique de contenus comportant un ensemble de bases de données comportant une base de connaissances et une base de données de contraintes, le procédé comportant les étapes suivantes :
- dériver des contraintes de niveau séquence à partir de contraintes de niveau scénario et de la base de connaissances, les contraintes de niveau séquence étant représentatives d'un graphe d'actions qui définit un enchaînement temporel de documents à produire automatiquement pour le compte desdits acteurs,
- dériver des contraintes de niveau document à partir des contraintes de niveau séquence et de contraintes linguistiques de la base de données de contraintes ;
- customiser un modèle d'intelligence artificielle de type modèle de langage avec contraintes, par un entraînement dudit modèle d'intelligence artificielle à partir de contenus préexistants et desdites contraintes de niveau document ; et
- générer automatiquement des contenus en utilisant le modèle customisé d'intelligence artificielle et lesdites contraintes de niveau document.

Il est aussi proposé un produit programme d'ordinateur comportant des instructions pour implémenter le procédé présenté ci-dessus, lorsque lesdites instructions sont exécutées par un processeur. Il est aussi proposé un support de stockage d'informations (non transitoire) stockant un programme d'ordinateur comportant des instructions pour implémenter le procédé présenté ci-dessus, lorsque lesdites instructions sont lues depuis le support de stockage d'informations et exécutées par un processeur.

### BREVE DESCRIPTION DES DESSINS

La description suivante d'au moins un mode de réalisation est établie en relation avec les dessins joints, parmi lesquels :
[Fig. 1] illustre schématiquement une architecture d'un système de génération automatique de contenus à des fins de simulation de cyber-influence et de lutte informationnelle ;
[Fig. 2] illustre schématiquement un agencement d'un module de configuration inclus dans le système de génération automatique de contenus ;
[Fig. 3] illustre schématiquement un organigramme d'un procédé de génération automatique de contenus ;
[Fig. 4] illustre schématiquement un exemple de graphe d'influence et de graphe d'actions, qui sont utilisés dans le procédé de génération automatique de contenus ;
[Fig. 5] illustre schématiquement un raffinement de contraintes dans le cadre de la présente invention ; et
[Fig. 6] illustre schématiquement un exemple d'unité matérielle permettant une implémentation du procédé de génération automatique de contenus par le système de génération automatique de contenus.

### EXPOSE DETAILLE DE MODES DE REALISATION

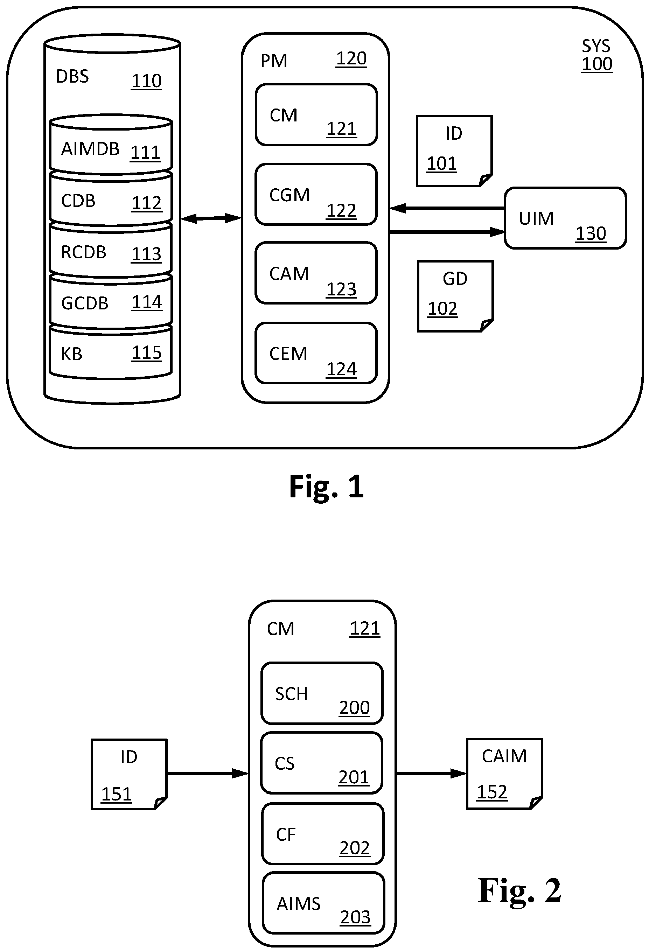

La **Fig. 1** illustre schématiquement une architecture d'un système SYS 100 de génération automatique de contenus à des fins de simulation de cyber-influence et de lutte informationnelle, notamment à des fins de formation ou d'entraînement à la compréhension de la cyber-influence et de la lutte informationnelle. Les contenus générés sont à base de textes, qui peuvent éventuellement être complétés par des publications d'autres types, comme des images et/ou des vidéos et/ou des signaux sonores.

De manière illustrative et non limitative, la suite de la description repose sur des modes de réalisation de génération automatique de contenus à des fins de formation à la compréhension de la cyber-influence et de la lutte informationnelle.

Le système SYS 100 de génération automatique de contenus comporte un ensemble de bases de données DBS (« DataBases Set » en anglais) 110.

L'ensemble de bases de données DBS 110 inclut une base de données de contraintes CDB (« Constraints DataBase » en anglais) 112. La base de données de contraintes CDB 112 contient de nombreuses contraintes linguistiques classées par type (type d'émotion, type de comportement, type de thématique...) permettant de restituer des contraintes de génération automatique de texte de natures variées parmi lesquelles choisir pour mettre en place tel ou tel scénario de formation.

L'ensemble de bases de données DBS 110 inclut une base de données de contenus réels RCDB (« Real Content DataBase » en anglais) 113. Les contenus réels sont des contenus qui sont ou ont étés accessibles en source ouverte et qui ont été collectés, notamment collectés sur des plateformes de réseaux sociaux (e.g. Twitter (marque déposée), Facebook (marque déposée)...), de sites internet (presse en ligne, blogs...), ou par exemple des contenus numérisés (journaux, magazines...).

L'ensemble de bases de données DBS 110 inclut préférentiellement une base de données de contenus générés GCDB (« Generated Content DataBase » en anglais) 114. Les contenus générés sont des contenus automatiquement générés par le système SYS 100 de génération automatique de contenus au fil de sessions de simulation (e.g., formation ou entraînement) à la cyber-influence et à la lutte informationnelle.

L'ensemble de bases de données DBS 110 inclut préférentiellement une base de données de modèles d'intelligence artificielle AIMDB (« Artificial Intelligence Models DataBase » en anglais) 111. Un modèle d'intelligence artificielle peut ainsi être sélectionné parmi différents modèles d'intelligence artificielle stockés dans la base de données de modèles d'intelligence artificielle AIMDB 111, comme par exemple GPT-2 (« Generative Pre-trained Transformer 2 » en anglais), GPT-3 (« Generative Pre-trained Transformer 3 » en anglais) ou encore LaMDA (« Language Model for Dialogue Applications » en anglais), pour ne citer que ceux-ci parmi la multitude de modèles de langage existants. Plusieurs modèles d'intelligence artificielle permettent notamment de générer automatiquement des contenus dans différentes langues (allemand, chinois...).

Les modèles d'intelligence artificielle stockés dans la base de données de modèles d'intelligence artificielle AIMDB 111 sont des modèles de langage avec contraintes (« Constrained Language Models » en anglais). Ces modèles d'intelligence artificielle respectent une base de contraintes lexicales permettant de générer du texte cohérent, par exemple à partir d'un ensemble de mots-clefs ou à partir d'un simple début de phrase. Comme divulgué ci-après, de tels modèles de langage avec contraintes ne peuvent pas permettre en eux-mêmes de constituer un environnement de formation adéquat, et doivent donc être customisés (ou spécialisés) pour répondre aux besoins spécifiques du scénario de formation.

Préférentiellement, les modèles d'intelligence artificielle stockés dans la base de données de modèles d'intelligence artificielle AIMDB 111 sont des modèles de langage pré-entraînés (« pre-trained » en anglais).

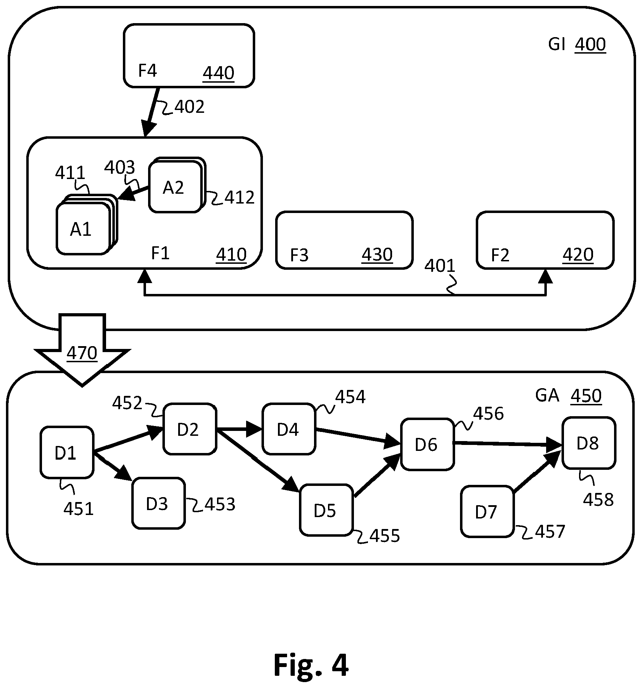

L'ensemble de bases de données DBS 110 inclut une base de connaissances KB (« Knowledge Base » en anglais) 115. Les connaissances définissent des schémas de comportements relationnels entre acteurs d'un scénario de formation (relation d'influence, relation de conflit, enchaînement de réponses à des messages...). Ces connaissances permettent de définir un graphe d'actions pour mettre en place le scénario de formation à partir d'un graphe d'influence entre acteurs. Un exemple de graphe d'influence et de graphe d'actions est présenté ci-après en relation avec la Fig. 4. De plus, les connaissances incluent des collections de thématiques, de vocabulaire, d'émotions, afin de permettre d'élaborer du contenu sur tel ou tel sujet ou autour de tel ou tel mot-clef.

Le système SYS 100 de génération automatique de contenus comporte en outre un module de traitement PM (« Processing Module » en anglais) 120 adapté et configuré pour générer automatiquement des contenus à partir de données d'entrée ID (« Input Data » en anglais) 101, plus particulièrement grâce à un module de génération de contenus CGM 122. Les données d'entrée ID 101 comportent des informations de description d'un scénario de formation : description d'acteurs du scénario de formation (noms, comptes de réseaux sociaux...) selon un graphe de relations sociales (membres d'une même communauté, relations d'influence, relations d'opposition...), description d'états d'humeur des acteurs, description de support de communication (articles de presse, tweets...) associés aux acteurs, mots-clefs relatifs à des sujets ou événements adressés dans le scénario de formation, volume de contenus à créer (quantité de messages...), temporalité, etc. Les données d'entrée ID 101 fixent un cadre au scénario de formation pour lequel des contenus doivent être automatiquement générés. Le module de traitement PM 120 est en outre adapté et configuré pour fournir ces contenus sous forme de données générées (« Generated Data » en anglais) 102.

Le système SYS 100 de génération automatique de contenus comporte en outre un gestionnaire d'interface utilisateur UIM (« User Interface Manager » en anglais) 130. Le gestionnaire d'interface utilisateur UIM 130 peut inclure un afficheur et des dispositifs de saisie (clavier...) et de pointage (souris...), ou d'une manière générale, des dispositifs d'interaction avec un ou plusieurs utilisateurs. Le gestionnaire d'interface utilisateur UIM 130 peut inclure une interface avec un réseau de communication pour permettre une interaction à distance. Le gestionnaire d'interface utilisateur UIM 130 est adapté et configuré pour recevoir les données d'entrée ID 101 et les faire suivre au module de traitement PM 120. Le gestionnaire d'interface utilisateur UIM 130 est par ailleurs adapté et configuré pour recevoir du module de traitement PM 120 les données générées 102 et les mettre à disposition d'une plateforme de formation (ou plus généralement, une plateforme de simulation).

Dans un mode de réalisation particulier, le gestionnaire d'interface utilisateur UIM 130 est en outre adapté et configuré pour permettre à un ou plusieurs utilisateurs d'évaluer des contenus automatiquement générés, de donner des consignes de raffinement de ces contenus (supprimer ou corriger des messages, rectifier des redondances, raccourcir des messages, introduire des nuances, ajouter des mots-clefs...) et de valider des contenus automatiquement générés afin de mettre à disposition de la plateforme de formation (ou plus généralement, la plateforme de simulation) les contenus ainsi validés.

Le module de traitement PM 120 comporte un module de configuration CM (« Configuration Module ») 121 adapté et configuré pour paramétrer le module de traitement PM 120, et plus particulièrement le module de génération de contenus CGM 122 en fonction des données d'entrée ID 101, et d'éventuelles consignes de raffinement. Le module de configuration CM 121 est adapté et configuré pour customiser (ou spécialiser) un modèle de langage avec contraintes, c'est-à-dire de lui ajouter de nouvelles contraintes, afin de le rendre adéquat aux spécificités de la formation à préparer. Un mode de réalisation particulier du module de configuration CM 121 est divulgué ci-après en relation avec la Fig. 2.

Le module de traitement PM 120 comporte en outre un module de génération de contenus CGM (« Content Génération Module ») 122 adapté et configuré pour générer automatiquement des contenus en respectant les contraintes définies par le module de configuration CM 121. Le module de génération de contenu CGM 122 utilise un modèle d'intelligence artificielle, tel que customisé par le module de configuration CM 121, pour générer automatiquement les contenus en respectant lesdites contraintes.

Le module de traitement PM 120 comporte préférentiellement en outre un module d'évaluation de contenus CAM (« Content Assessment Module ») 123 adapté et configuré pour gérer l'évaluation des contenus automatiquement générés par le module de génération de contenus CGM 122 et de transmettre les consignes de raffinement éventuelles au module de configuration CM 121 afin d'ordonner au module de génération de contenus CGM 122 la mise à jour en conséquence des contenus automatiquement générés. Préférentiellement, le module d'évaluation de contenus CAM 123 est adapté et configuré pour calculer un ensemble de métriques sur les contenus générés et comparer ces métriques à des seuils prédéfinis, afin de fournir via le gestionnaire d'interface utilisateur UIM 130 un tableau de bord qualitatif vis-à-vis des contenus automatiquement générés et ainsi guider un ou plusieurs utilisateurs dans l'éventuel raffinement et la validation des contenus automatiquement générés.

Le module de traitement PM 120 comporte en outre un module d'export de contenus CEM (« Content Export Module ») 124 configuré et adapté pour exporter les données générées 102, à savoir les contenus automatiquement générés par le module de génération de contenus CGM 122.

La **Fig. 2** illustre schématiquement un agencement du module de configuration CM 121.

Le module de configuration CM 121 est agencé et configuré pour fournir un modèle customisé d'intelligence artificielle CAIM (« Customized Artificial Intelligence Model » en anglais) 152 à partir des données d'entrée ID 101.

Le module de configuration CM 121 comporte un ordonnanceur SCH (« Scheduler » en anglais) 200. L'ordonnanceur SCH 200 est adapté et configuré pour transformer des contraintes de niveau scénario représentatives du graphe d'influence en contraintes de niveau séquence représentatives du graphe d'actions. L'ordonnanceur SCH 200 est ainsi adapté et configuré pour développer un schéma d'interactions de contenus entre acteurs du scénario de formation.

Le module de configuration CM 121 comporte un sélecteur de contraintes CS (« Constraints Selector » en anglais) 201 adapté et configuré pour transformer les contraintes de niveau séquence en contraintes de niveau document. Le sélecteur de contraintes CS 201 est configuré et adapté pour sélectionner des contraintes linguistiques (synonymes, antonymes, signification contextuelle de mots-clefs en accord avec le contexte du scénario, style adapté aux supports de documents (tweets, articles de presse...)) depuis la base de données de contraintes CDB 112 pour définir des structures de documents conformes au graphe d'actions.

Dans un mode de réalisation particulier, le module de configuration CM 121 comporte en outre un module de formatage de contraintes CF (« Constraints Formator » en anglais) 202. Le module de configuration CM 121 est adapté et configuré pour passer d'un langage adapté aux machines (« machine-friendly language » en anglais), facilement manipulable par des opérateurs humains comme un langage de programmation, vers un langage naturel, afin de faciliter le traitement par un modèle d'intelligence artificielle de génération automatique de texte.

Le module de configuration CM 121 comporte préférentiellement en outre un sélecteur de modèle d'intelligence artificielle AIMS (« Artificial Intelligence Model Selector » en anglais) 203. Le sélecteur de modèle d'intelligence artificielle AIMS 203 est configuré et agencé pour sélectionner un modèle générique d'intelligence artificielle dans la base de données de modèles d'intelligence artificielle AIMDB 111 qui soit adapté au scénario de formation. Un modèle générique d'intelligence artificielle est un modèle préexistant d'intelligence artificielle, qui n'est pas encore spécialisé pour la thématique de la simulation / formation. Par exemple, si les données d'entrée ID 101 définissent une langue spécifique, le sélecteur de modèle d'intelligence artificielle AIMS 203 sélectionne un modèle de langage de type BERT (« Bidirectional Encoder Représentations from Transformers » en anglais) particulièrement adapté à cette langue spécifique. En variante, le sélecteur de modèle d'intelligence artificielle AIMS 203 sélectionne le modèle générique d'intelligence artificielle à utiliser en suivant une configuration utilisateur exprimée par exemple directement dans les données d'entrée ID 101.

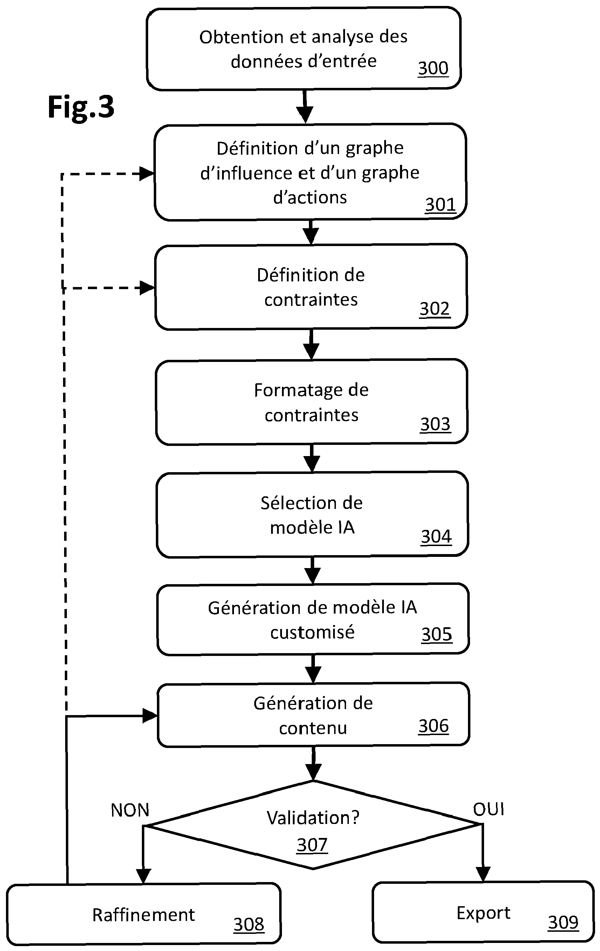

Le module de configuration CM 121 est agencé et configuré pour effectuer un entraînement complémentaire du modèle d'intelligence artificielle sélectionné par le sélecteur de modèle d'intelligence artificielle AIMS 203, à savoir le modèle d'intelligence artificielle dit « générique ». L'entraînement est réalisé à l'aide de contenus préexistants. Dans un mode de réalisation particulier, ces contenus préexistants sont des contenus réels qui sont obtenus de la base de données de contenus réels RCDB 113 et qui sont sélectionnés en fonction des contraintes de niveau document établies par le sélecteur de contraintes CS 201, éventuellement formatées par le module de formatage de contraintes CF 202. Dans un mode de réalisation particulier, ces contenus préexistants sont complétés par des contenus générés qui sont obtenus de la base de données de contenus générés GCDB 114 et qui sont sélectionnés de la même manière. Après entraînement, un modèle d'intelligence artificielle spécialisé pour le scénario recherché est ainsi obtenu, à savoir le modèle customisé d'intelligence artificielle CAIM 152. Cet aspect est détaillé ci-après en relation avec la Fig. 3.

La Fig. 3 illustre schématiquement un organigramme d'un procédé de génération automatique de contenus tel qu'implémenté par le système SYS 100 de génération automatique de contenus.

Dans une étape 300, le système SYS 100 de génération automatique de contenus, et plus particulièrement le module de configuration CM 121, obtient et analyse les données d'entrée ID 101. Des balises prédéfinies peuvent être utilisées pour délimiter et identifier des informations contenues dans les données d'entrée ID 101. Une reconnaissance d'entités nommées NER (« Named-Entity Recognition » en anglais) peut être utilisée, en variante ou en complément, pour reconnaître et identifier des informations contenues dans les données d'entrée ID 101.

Les données d'entrée ID 101 sont analysées pour récupérer des informations permettant d'établir les contraintes de niveau scénario. Notamment, les données d'entrée ID 101 sont analysées pour récupérer des informations permettant d'identifier les acteurs du scénario de formation (identification de factions, quantité d'acteurs par faction...) et leurs relations entre eux, de sorte à pouvoir établir le graphe d'influence.

Les données d'entrée ID 101 sont analysées pour en outre récupérer des mots-clefs permettant au système SYS 100 de génération automatique de contenus, et plus particulièrement à l'ordonnanceur SCH 200, par recherche de similarités dans la base de connaissances KB 115, de définir des contextes de contenus dans les contraintes de niveau séquence.

Dans une étape 301, le système SYS 100 de génération automatique de contenus définit un graphe d'influence entre acteurs du scénario de formation et un graphe d'actions. Le graphe d'influence définit les relations entre les acteurs du scénario de formation et le graphe d'actions définit un enchaînement temporel de documents (tweets, articles de presse...) à produire automatiquement pour le compte desdits acteurs. Les contraintes de niveau scénario sont une représentation en langage machine du graphe d'influence. Le graphe d'actions est représenté, en langage machine, par des contraintes de niveau séquence. Les contraintes de niveau séquence sont dérivées des contraintes de niveau scénario.

Une proposition de graphe d'influence, à partir des données d'entrée ID 101 et de la base de connaissance KD 115, peut être faite à un ou plusieurs utilisateurs via le module d'interface utilisateur UIM 130, pour éventuel ajustement (c'est-à-dire un ajustement éventuel des contraintes de niveau scénario) et validation.

Une proposition de graphe d'actions, à partir des données d'entrée ID 101 (mots-clefs...) et du graphe d'influence, peut être faite à un ou plusieurs utilisateurs via le module d'interface utilisateur UIM 130, pour éventuel ajustement (c'est-à-dire un ajustement éventuel des contraintes de niveau séquence) et validation.

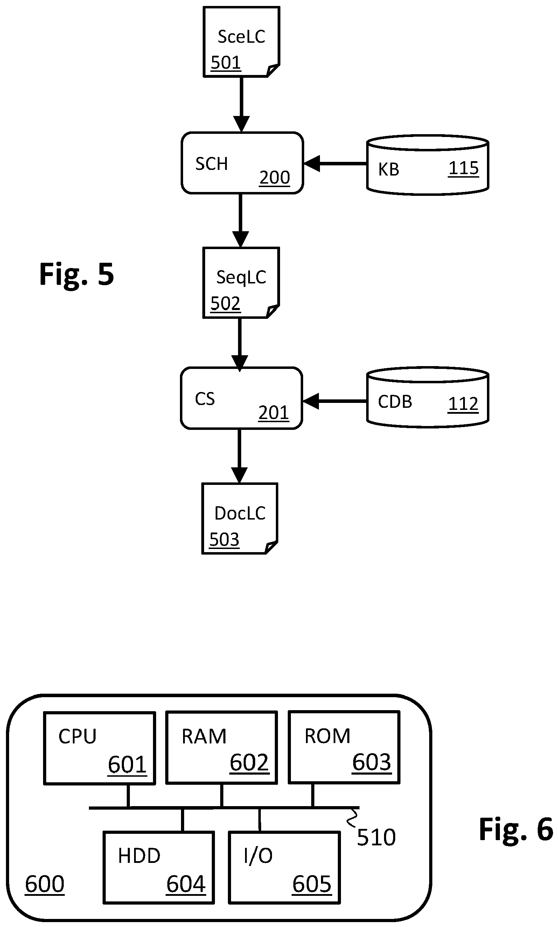

Dans une étape 302, le système SYS 100 de génération automatique de contenus définit des contraintes de niveau document dérivées des contraintes de niveau séquence. Cet aspect est détaillé ci-après en relation avec la Fig. 5.

Dans une étape 303, dans un mode de réalisation particulier, le système SYS 100 de génération automatique de contenus formate les contraintes de niveau document en les convertissant depuis un langage adapté aux machines (« machine-friendly language » en anglais) vers un langage naturel, afin de les rendre plus facilement interprétables par un modèle d'intelligence artificielle de génération automatique de texte.

Dans un mode de réalisation particulier, dans une étape 304, le système SYS 100 de génération automatique de contenus sélectionne un modèle d'intelligence artificielle dans la base de données de modèles d'intelligence artificielle AIMDB 111 en fonction des données d'entrée ID 101. En variante, le système SYS 100 de génération automatique de contenus utilise un unique modèle d'intelligence artificielle prédéfini. Ce modèle d'intelligence artificielle est un modèle de langage avec contraintes respectant une base de contraintes lexicales permettant de générer du texte cohérent. Ce modèle d'intelligence artificielle est dit « générique » et doit encore être customisé.

Dans une étape 305, le système SYS 100 de génération automatique de contenus génère un modèle customisé d'intelligence artificielle à partir du modèle générique d'intelligence artificielle en tenant compte des contraintes de niveau document obtenues à l'étape 302, éventuellement formattées via l'étape 303. Le modèle générique d'intelligence artificielle subit alors un entraînement complémentaire afin d'être customisé pour respecter les contraintes spécifiques au scénario de formation.

Le modèle générique d'intelligence artificielle est customisé à partir de contenus préexistants, tels que les contenus réels, qui sont récupérés (« retrieved » en anglais) de la base de données de contenus réels RCDB 113, et éventuellement à partir de contenus générés, qui sont récupérés de la base de données de contenus générés GCDB 114. Les contenus réels stockés dans la base de données de contenus réels RCDB 113, et les contenus générés stockés dans la base de données de contenus générés GCDB 114, sont associés avec des schémas de contraintes de niveau document que lesdits contenus respectent. Les contenus récupérés de la base de données de contenus réels RCDB 113, et éventuellement de la base de données de contenus générés GCDB 114, sont des contenus associés à des schémas de contraintes de niveau document qui correspondent aux contraintes de niveau document obtenues à l'étape 302, éventuellement formatées via l'étape 303. Par exemple, les contenus récupérés de la base de données de contenus réels RCDB 113, et éventuellement de la base de données de contenus générés GCDB 114, sont obtenus par recherche de similarités avec des mots-clefs contenus dans les contraintes de niveau document, en appliquant une technique de reconnaissance d'entités nommées NER (« Named-Entity Recognition » en anglais). Ainsi, l'entraînement complémentaire apporte un apprentissage machine focalisant sur les contraintes résultant du scénario de formation.

Dans une étape 306, le système SYS 100 de génération automatique de contenus utilise le modèle customisé d'intelligence artificielle pour générer des contenus respectant donc les contraintes de niveau scénario exprimées dans le scénario de formation.

Dans une étape 307, le système SYS 100 de génération automatique de contenus interagit avec un ou plusieurs utilisateurs dans le cadre d'une évaluation des contenus automatiquement générés. Dans le cas où les contenus automatiquement générés sont validés, une étape 309 est effectuée ; sinon, une étape 308 est effectuée.

Dans l'étape 308, le système SYS 100 de génération automatique de contenus obtient des consignes de raffinement des contenus automatiquement générés. Puis, les contenus automatiquement générés sont modifiés en conséquence. Selon le raffinement souhaité, il se peut que le graphe d'influence entre acteurs du scénario de formation et le graphe d'actions aient à être modifiés (rebouclage à l'étape 301). Une autre possibilité est que la sélection de contraintes ait à être modifiée (rebouclage à l'étape 302), ce qui nécessite une modification en conséquence du modèle customisé d'intelligence artificielle (étape 305) avec éventuellement une nouvelle sélection préalable d'un modèle générique d'intelligence artificielle (étape 304). Une autre possibilité est que seuls les documents générés aient à être modifiés (rebouclage à l'étape 306). Par exemple, en raffinant certains documents automatiquement générés, le système SYS 100 de génération automatique de contenus va faire de nouvelles propositions pour d'autres documents générés automatiquement (qui, selon le graphe d'actions, dépendent des documents raffinés). Enfin (non représenté sur la Fig. 3), il est possible qu'un ou plusieurs opérateurs humains effectuent des modifications mineures (ajout de phrase, modification de mot...) dans un ou plusieurs documents générés automatiquement, et l'étape 309 est alors effectuée sans avoir à refaire une passe de génération automatique de contenus.

Dans l'étape 309, le système SYS 100 de génération automatique de contenus exporte les contenus automatiquement générés et validés (à savoir les documents susmentionnés) en vue d'une utilisation subséquente sur la plateforme de formation (ou plus généralement, sur la plateforme de simulation). Dans un mode de réalisation particulier, les contenus automatiquement générés et validés sont stockés dans la base de données de contenus générés GCDB 114 afin de pouvoir servir à leur tour à entraîner un modèle d'intelligence artificielle lors de futures formations.

La **Fig. 4** illustre schématiquement un exemple de graphe d'influence GI (« Graph of Influence » en anglais) 400 et de graphe d'actions GA (« Graph of Actions » en anglais) 450, qui sont utilisés dans le procédé de génération automatique de contenus.

Dans le graphe d'influence GI 400, quatre factions d'acteurs sont représentées. Une première faction F1 410 correspond par exemple à une faction pro-« camp1 », et une deuxième faction F2 420 correspond par exemple à une faction pro-« camp2 », dans le cadre d'un sujet portant sur une guerre entre « camp1 » et « camp2 ». Une troisième faction F3 430 est neutre, et une quatrième F4 440 est partisane d'un allié influent du « camp1 ». Chaque faction contient un ou plusieurs, et typiquement plusieurs dizaines, d'acteurs dans le scénario de formation.

Le graphe d'influence GI 400 établit une première relation 401 de conflit entre la première faction F1 410 et la deuxième faction F2 420. Le graphe d'influence GI 400 établit une deuxième relation 402 d'influence entre la quatrième faction F4 440 et la première faction F1 410, où la quatrième faction F4 440 domine (en termes d'influence) la première faction F1 410.

Le graphe d'influence GI 400 peut aussi établir des relations au sein d'une même faction. Par exemple, dans la première faction F1 410, une troisième relation 403 d'influence entre un premier groupe d'acteurs A1 411 et un deuxième groupe d'acteurs A2 412 est établie, où le deuxième groupe d'acteurs A2 412 domine (en termes d'influence) le premier groupe d'acteurs A1 411.

Ainsi, le graphe d'influence GI 400 établit que :
- des documents (messages, articles de presse...) publiés par un acteur d'une faction sont sujets à entraîner un message de soutien d'un autre acteur de la même faction,
- des documents (messages, articles de presse...) publiés par un acteur d'une faction (par exemple, de la première faction F1 410) en relation de conflit avec une autre faction (par exemple, la deuxième faction F2 420) est sujette à entraîner un message de contradiction d'un acteur de cette autre faction,

- des documents (messages, articles de presse...) publiés par un acteur d'une faction (par exemple, de la quatrième faction F4 440) en relation d'influence descendante (domination) avec une autre faction (par exemple, de la première faction F1 440) sont sujets à entraîner un message de relais ou d'amplification de la part d'un acteur de cette autre faction,
- des documents (messages, articles de presse...) publiés par un acteur d'un premier groupe d'une faction (par exemple, du deuxième groupe A2 412) en relation d'influence descendante (domination) avec un autre groupe de cette faction (par exemple, le premier groupe A1 411) sont sujets à entraîner un message de relais ou d'amplification d'un acteur de cet autre groupe,
- etc.

D'autres types de relations peuvent être définis dans le graphe d'influence GI 400.

Une fois le graphe d'influence GI 400 établi entre les différents acteurs du scénario de formation, une opération d'ordonnancement (« scheduling » en anglais) 470 est réalisée. Cette opération d'ordonnancement produit le graphe d'actions GA 450.

Le graphe d'actions GA 450 comporte une représentation d'un enchaînement chronologique de descripteurs de documents destinés à constituer les contenus automatiquement générés. Chaque descripteur de document expose au moins une information de type de document (tweet, émail, article...), une information d'horodatage dans l'enchaînement chronologique, une information de l'acteur auteur du document, et une information de la faction de l'auteur du document.

De manière illustrative, dans le graphe d'actions GA 450, l'enchaînement chronologique débute par un premier document D1 451. Le document D1 451 est par exemple un tweet publié par un acteur de la première faction F1 410. La publication du document D1 451 entraîne la publication d'un document D2 452 précédée de la publication d'un document D3 453. Le document D2 452 est par exemple un tweet publié par un acteur de la deuxième faction F2 420 en réaction d'opposition au document D1 451. Le document D3 453 est par exemple un tweet publié par un acteur de la troisième faction F3 430. La publication du document D2 452 entraîne la publication d'un document D4 454 puis d'un document D5 455. Le document D4 454 est par exemple un tweet publié par un acteur de la deuxième faction F2 420 en soutien au document D2 452 et le document D5 455 est par exemple un tweet publié par un acteur de la première faction F1 410 en réaction d'opposition au document D2 452. La publication des documents D4 454 et D5 455 entraîne la publication d'un document D6 456. Le document D6 456 est par exemple un article de blog publié par un acteur de la troisième faction F3 430. Un document D7 457 est ensuite publié. Le document D7 457 est par exemple un tweet d'un acteur du groupe A2 412 de la première faction F1 410. La publication des documents D6 456 et D7 457 entraîne la publication d'un document D8 458. Le document D8 458 est par exemple un tweet d'un acteur du groupe A1 411 de la première faction F1 410 en soutien au document D6 456 et en réaction critique au document D7 457.

Le graphe d'actions GA 450 peut faire apparaître un enchaînement chronologique plus complexe de descripteurs de documents, avec plus ou moins de relations de causalité entre les publications de documents et notamment des documents publiés de manière isolée (sans réaction). Les descripteurs de documents mentionnés ci-dessus sont exprimés sous forme de contraintes, ici de contraintes de niveau séquence, afin d'être aisément dérivés en contraintes de niveau document et être ainsi exprimés sous une forme adéquate pour un traitement par un modèle d'intelligence artificielle de type modèle de langage avec contraintes.

La **Fig. 5** illustre schématiquement un agencement du système SYS 100 de génération automatique de contenus, qui permet de dériver des contraintes de niveau scénario définissant des grandes lignes d'un scénario de formation en contraintes de niveau séquence définissant un enchaînement de documents, puis en contraintes de niveau document définissant des contraintes exploitables pour générer automatiquement des contenus de documents qui sont adaptés au scénario de formation.

A partir des contraintes de niveau scénario SceLC (« Scenario-Level Contraints » en anglais) 501, l'ordonnanceur SCH 200 dérive des contraintes de niveau séquence SeqLC (« Sequence-Level Contraints » en anglais) 502. Pour générer les contraintes de niveau séquence SeqLC 502 à partir des contraintes de niveau scénario SceLC 501, l'ordonnanceur SCH 200 utilise la base de connaissances KB 115.

Les contraintes de niveau scénario SceLC 501 sont définies par le graphe d'influence GI 400, c'est-à-dire que les contraintes de niveau scénario SceLC 501 sont une représentation du graphe d'influence GI 400 sous forme de contraintes.

Les contraintes de niveau séquence SeqLC 502 sont définies par le graphe d'actions GA 450, c'est-à-dire que les contraintes de niveau séquence SeqLC 502 sont une représentation du graphe d'actions GA 450 sous forme de contraintes.

A partir des contraintes de niveau séquence SeqLC 502, le sélecteur de contraintes CS 201 dérive les contraintes de niveau document DocLC (« Document-Level Contraints » en anglais) 503. Les contraintes de niveau document DocLC 503 sont exploitables par le module de configuration CM 121 pour effectuer l'entraînement complémentaire du modèle d'intelligence artificielle sélectionné par le sélecteur de modèle d'intelligence artificielle AIMS 203, après éventuel formatage par le module de formatage de contraintes CF 202. Pour générer les contraintes de niveau document DocLC 503 à partir des contraintes de niveau séquence SeqLC 502, l'ordonnanceur SCH 200 utilise la base de données de contraintes CDB 112 (contraintes linguistiques) et un sous-ensemble de la base de connaissances KB 115 qui a été sélectionné par l'ordonnanceur SCH 200 d'après les contraintes de niveau scénario SceLC 501.

Prenons un exemple simplifié dans lequel les données d'entrées ID expriment des contraintes de niveau scénario, comme suit :
Type : microblogs
Acteurs : [{faction1 : « camp1 », nombre : 50}, {faction2 : « camp2 », nombre : 30}, {faction3 : neutre, nombre : 50}]
Sujets : [Sujet 1 :{« responsabilité de crimes : attribué au « camp1 » », champ_lexical : [haine, racisme, crime organisé, droits de l'homme, preuves, enquête], mentions_exactes : [« Ville1 », « Organisation1 », « Personnel »]} ;
Sujet2 : « réalité découverte morts civils : mensonge intégral », champ_lexical : [propagande, montage, manipulation, preuves, enquête], mentions_exactes : [« Ville2 », « Personne2 »]}]
Postures : [{camp1 : [{Sujet1, déni}, {Sujet2, soutien}], {camp2 : [{Sujet1, soutien}, {Sujet2, déni}], {neutre : [{Sujet1, interrogation}, {Sujet2, diffus}]
où : « camp1 » identifie un premier camp de belligérants, « camp2 » identifie un deuxième camp de belligérants, « Ville1 » identifie un premier nom de ville, « Ville2 » identifie un deuxième nom de ville, « Organisation1 » identifie un premier nom d'organisation, « Personnel » identifie un premier nom de personne, « Personne2 » identifie un deuxième nom de personne.

Comme il apparaît dans l'exemple simplifié ci-dessus, les contraintes de niveau scénario fournissent des informations (champ_lexical) de champ lexical (et qui permettent donc de définir des mots ou expressions analogues à utiliser dans les documents qui seront automatiquement générés)., ainsi que des informations (mentions_exactes) destinées à être mentionnées exactement (et qui doivent donc se retrouver telles quelles dans un certain nombre de documents qui seront automatiquement générés).

L'ordonnanceur SCH 200 définit alors le graphe d'actions GA 450, ce qui définit un nombre de documents à générer automatiquement, avec pour chacun, un type de document, un horodatage (temporalité), un auteur, un comportement, une posture vis-à-vis d'un sujet, et potentiellement d'autres champs spécifiques (lieux, émotion, type d'acteur...).

### Séquence n°1 :

TS1, Document1 : faction1, (Sujet1, posture : déni), mention_exacte : « Ville1 », ton : passionné, auteur : institutionnel
TS2, Document2 : faction3, (Sujet1, posture : requête), ton : factuel, auteur : média
TS3, Document3 : faction2, (Sujet1, posture : soutien), ton : vindicatif, auteur : individu
TS4, Document4 : (réaction Document1, opposition), mention_exacte : « Ville1 », faction2, (Sujet1, posture : soutien), ton : vindicatif, auteur : institutionnel
où : TS1, TS2, TS3 et TS4 sont des informations d'horodatage (chronologie).

La séquence présentée ci-dessus est tirée d'un modèle (« template » en anglais), de type « prise de position », obtenu de la base de connaissances KB 115. Des nombres d'acteurs et de documents composant la séquence peuvent être aléatoirement ou pseudo-aléatoirement choisis. Des attributs (type institutionnel/média/individu, émotion, posture...) de ces acteurs peuvent être aussi tirés aléatoirement ou pseudo-aléatoirement.

D'autres séquences sont définies en compléments de la Séquence n°1 ci-dessus afin de former le graphe d'actions GA 450, pour notamment traiter du Sujet2, etc. Ce même modèle de séquence ou d'autres modèles de séquences peuvent être utilisés pour définir ces autres séquences, de sorte à respecter l'ensemble des contraintes de niveau scénario, quant aux sujets, factions, postures...

Comme déjà indiqué, le graphe d'actions GA 450 peut définir des liens entre ces documents, de sorte à générer des contenus sous forme de conversations ou de réactions en chaîne. Par exemple, le document libellé Document4 peut être relié au document libellé Document1 grâce à un lien (« réaction Document1 ») indiquant que les acteurs se répondent les uns aux autres.

Les contraintes exprimées ci-dessus sont destinées à être complétées par des contraintes linguistiques, issues de la base de données de contraintes CDB 112, afin de former, pour chaque document à produire, les contraintes de niveau document à fournir au module de génération de contenus CGM 122 pour générer automatiquement le contenu dudit document. Un exemple de telles contraintes linguistiques est proposé ci-dessous.

### Document1 :

Type : microblog
Horodatage : [TS1]
Contraintes Texte :
   Champ_lexical : [haine, racisme, crime organisé] ; Mots-clefs : [« Ville1 », agression, preuves fabriquées] ; Comportement : déni ; Emotion : neutre Auteur : id1001

### Document2 :

Type : microblog
Horodatage : [TS2]
Contraintes Texte : Champ_lexical : [haine, racisme, crime organisé, preuves] ;
Mots-clefs : [preuves fiables, attente] ; Comportement : neutre ; Emotion : doute Auteur : id3001

### Document3 :

Type : microblog
Horodatage : [TS3]
Contraintes Texte : Champ_lexical : [racisme, crime organisé, enquête] ; Mots-clefs : [actes criminels, justice] ; Comportement : approbation ; Emotion : colère, dégoût Auteur : id2001

### Document4 :

Type : microblog
Horodatage : [TS4]
Contraintes Texte : Champ_lexical : [racisme, crime organisé, droits de l'homme] ;
Mots-clefs : [désinformation, dictature, criminels] ; Comportement : déni ; Emotion : colère, dégoût
Auteur : id2002
Lien : réponse à [Document1]

Dans l'exemple ci-dessus, les informations inscrites dans des blocs « Contraintes Texte » sont des informations transmises telles quelles à un générateur de texte proprement dit. Les informations de champ lexical pour un document sont une reprise partielle des informations de champ lexical du sujet (e.g., Sujet1) indiqué dans les contraintes de niveau séquence pour ledit document (et qui proviennent, en amont, des contraintes de niveau scénario). Ces informations de champ lexical peuvent inclure une dizaine ou une quinzaine de mots permettant d'orienter un générateur de texte sur la thématique à aborder dans du texte automatiquement généré. Les informations de mots-clefs sont des mots ou expressions (e.g., 3 à 6 mots ou expressions) à placer dans le texte automatiquement généré, ces mots-clefs étant soit repris tels quels du sujet (e.g., Sujet1) indiqué dans les contraintes de niveau séquence pour ledit document (et qui proviennent, en amont, des contraintes de niveau scénario), soit dérivés par similarités grâce à la base de données de contraintes CDB 112.

Dans l'exemple ci-dessus, les auteurs sont identifiés par un identifiant (e.g., id2002) en lien avec la faction à laquelle l'auteur en question appartient.

La **Fig. 6** illustre schématiquement un exemple d'unité matérielle 600 adaptée et configurée pour implémenter le système SYS 100 de génération automatique de contenus.

L'unité matérielle 600 comprend, reliés par un bus de communication 610 : un processeur ou CPU (pour « Central Processing Unit » en anglais) 601, ou une grappe de tels processeurs, comme par exemple des GPU (« Graphics Processing Units » en anglais) ; une mémoire vive RAM (pour « Random Access Memory » en anglais) 602 ; une mémoire morte ROM (pour « Read Only Memory » en anglais) 603, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 604, ou un lecteur de support de stockage, tel qu'un lecteur de cartes SD (pour « Secure Digital » en anglais) ; un ensemble d'interfaces d'entrées et/ou sorties I/O (« Inputs/Outputs » en anglais) 605, telles que des interfaces homme-machine et/ou des interfaces de communication, permettant notamment au système SYS 100 de génération automatique de contenus de recevoir les données d'entrée ID 101 (ou des informations permettant de constituer les données d'entrée ID 101) et exporter les données générées GD 102.

Le processeur 601 est capable d'exécuter des instructions chargées dans la RAM 602 à partir de la ROM 603, d'une mémoire externe (non représentée), d'un support de stockage, tel qu'une carte SD ou le disque dur HDD 604, ou d'un réseau de communication. Lorsque l'unité matérielle 600 est mise sous tension, le processeur 601 est capable de lire de la RAM 402 des instructions et de les exécuter. Ces instructions forment un programme d'ordinateur causant l'implémentation, par le processeur 601, de l'architecture et des procédés décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

D'une manière générale, le système SYS 100 de génération automatique de contenus comprend donc de la circuiterie électronique agencée et configurée pour implémenter l'architecture, ainsi que les étapes, comportements et algorithmes décrits ici.

## Revendications

1. Système (100) de génération automatique de contenus configuré pour générer automatiquement des contenus à partir de contraintes de niveau scénario correspondant à un graphe d'influence (400) entre acteurs d'un scénario de simulation de cyber-influence et de lutte informationnelle, le système (100) de génération automatique de contenus comportant :
- un ensemble de bases de données (110) comportant une base de connaissances (115) et une base de données de contraintes (112) ;
- un module de configuration (121) comportant un ordonnanceur (200) et un sélecteur de contraintes (201), l'ordonnanceur (200) étant configuré pour dériver des contraintes de niveau séquence à partir des contraintes de niveau scénario et de la base de connaissances, les contraintes de niveau séquence étant représentatives d'un graphe d'actions (450) qui définit un enchaînement temporel de documents à produire automatiquement pour le compte desdits acteurs, et le sélecteur de contraintes (201) étant configuré pour dériver des contraintes de niveau document à partir des contraintes de niveau séquence et de contraintes linguistiques de la base de données de contraintes (112) ;
- et un module de génération de contenus (122) ;
où le module de configuration (121) est en outre apte à customiser un modèle d'intelligence artificielle de type modèle de langage avec contraintes, par un entraînement dudit modèle d'intelligence artificielle à partir de contenus préexistants et desdites contraintes de niveau document ;
et où le module de génération de contenus (122) est en outre apte à générer automatiquement des contenus en utilisant le modèle customisé d'intelligence artificielle et lesdites contraintes de niveau document.

2. Système (100) selon la revendication 1, dans lequel l'ensemble de bases de données (110) comporte en outre une base de données de contenus réels (113) qui sont ou ont été accessibles en source ouverte et qui ont été collectés,
et dans le cadre de l'entraînement de ladite intelligence artificielle, lesdits contenus préexistants incluent des contenus réels stockés dans la base de données de contenus réels (113).

3. Système (100) selon la revendication 2, dans lequel l'ensemble de bases de données (110) comporte en outre une base de données de contenus générés (114) qui sont des contenus automatiquement générés par le système de génération automatique de contenus (100) au fil de sessions de simulation de cyber-influence et de lutte informationnelle,
et dans le cadre de l'entraînement de ladite intelligence artificielle, lesdits contenus préexistants incluent des contenus générés stockés dans la base de données de contenus générés (114).

4. Système (100) selon l'une quelconque des revendications 1 à 3, dans lequel l'ensemble de bases de données (110) comporte en outre une base de données de modèles d'intelligence artificielle (111), le module de configuration (121) comporte en outre un sélecteur de modèle d'intelligence artificielle (203) apte à sélectionner, dans la base de données de modèles d'intelligence artificielle (111), un modèle générique d'intelligence artificielle sur lequel l'entraînement est réalisé pour obtenir le modèle customisé d'intelligence artificielle.

5. Système (100) selon l'une quelconque des revendications 1 à 4, comportant en outre un gestionnaire d'interface utilisateur (130), ainsi qu'un module d'évaluation de contenus (124) apte à calculer un ensemble de métriques sur les contenus automatiquement générés et à comparer ces métriques à des seuils prédéfinis, afin de fournir via le gestionnaire d'interface utilisateur (130) un tableau de bord qualitatif vis-à-vis des contenus automatiquement générés.

6. Système (100) selon l'une quelconque des revendications 1 à 5, dans lequel le module de configuration (121) comporte en outre un module de formatage de contraintes (202) apte à convertir les contraintes de niveau document depuis un langage adapté aux machines vers un langage naturel.

7. Système (100) selon l'une quelconque des revendications 1 à 6, dans lequel le module de configuration est apte à analyser des données d'entrée (101) pour récupérer des informations permettant d'établir les contraintes de niveau scénario, pour en outre récupérer des mots-clefs permettant à l'ordonnanceur (200), par recherche de similarités dans la base de connaissances (115), de définir des contextes de contenus dans les contraintes de niveau séquence.

8. Procédé de génération automatique de contenus à partir de contraintes de niveau scénario correspondant à un graphe d'influence (400) entre acteurs d'un scénario de simulation de cyber-influence et de lutte informationnelle, le procédé étant implémenté par un système (100) de génération automatique de contenus comportant un ensemble de bases de données (110) comportant une base de connaissances (115), et une base de données de contraintes (112), le procédé comportant :
- dériver des contraintes de niveau séquence à partir de contraintes de niveau scénario et de la base de connaissances (115), les contraintes de niveau séquence étant représentatives d'un graphe d'actions (450) qui définit un enchaînement temporel de documents à produire automatiquement pour le compte desdits acteurs,
- dériver des contraintes de niveau document à partir des contraintes de niveau séquence et de contraintes linguistiques de la base de données de contraintes (112) ;
- customiser un modèle d'intelligence artificielle de type modèle de langage avec contraintes, par un entraînement dudit modèle d'intelligence artificielle à partir de contenus préexistants et desdites contraintes de niveau document ; et
- générer automatiquement des contenus en utilisant le modèle customisé d'intelligence artificielle et lesdites contraintes de niveau document.

9. Produit programme d'ordinateur comportant des instructions pour implémenter le procédé selon la revendication 8, lorsque lesdites instructions sont exécutées par un processeur.

10. Support de stockage d'informations stockant un programme d'ordinateur comportant des instructions pour implémenter le procédé selon la revendication 8, lorsque lesdites instructions sont lues depuis le support de stockage d'informations et exécutées par un processeur.
